# EUROPEAN PATENT APPLICATION

(11) **EP 4 624 698 A1**
(43) Date of publication of application: **01.10.2025**
(21) Application number: 24166589.2
(22) Date of filing: 26.03.2024
(51) Int. Cl.: E04G 21/04, B28C 5/42

(54) **MATERIAL DEPOSITION DEVICE**

(71) Applicant: Vasey, Lauren Barnett, 8037 Zürich (CH); Elmiger, Tobias, 5000 Aarau (CH); Hutter, Marco, 9203 Niederwil (CH); Chadha, Kunaljit Singh, 8049 Zürich (CH); Leung, Pok Yin, Hong Kong, Hong Kong SAR (HK); Gramazio, Fabio Matteo, 8047 Zürich (CH); Kohler, Matthias Daniel, 8047 Zürich (CH)
(72) Inventor: Vasey, Lauren Barnett, 8037 Zürich (CH); Elmiger, Tobias, 5000 Aarau (CH); Hutter, Marco, 9203 Niederwil (CH); Chadha, Kunaljit Singh, 8049 Zürich (CH); Leung, Pok Yin, Hong Kong, Hong Kong SAR (HK); Gramazio, Fabio Matteo, 8047 Zürich (CH); Kohler, Matthias Daniel, 8047 Zürich (CH)
(74) Representative: WBH Wachenhausen Patentanwälte PartG mbB

(57) **Abstract**

The present invention relates to a shooting assembly (100) for propelling a material part (402) for building an architectural structure (700) through additive manufacturing, the shooting assembly (100) comprising a propulsion assembly (110) with an accelerating element (112; 132) configured to frictionally engage the material part (402), and a delimiting device (130, 132), wherein the accelerating element (112; 132) and the delimiting device (130, 132) delimit a passage (150) with an inlet (9) and an exit (152) for receiving and accelerating the material part (402), the passage (150) optionally narrowing from the inlet (9) to the exit (152) for compressing the material part (402). The invention also relates to a material deposition device (10) for propelling a material part (402) with such a shooting assembly (100) and to a material deposition system (600) with such a material deposition device (10). The present invention further relates to a method for building an architectural structure (700) through additive manufacturing with such a material deposition device (10).

## Description

### Technical Field

The present invention relates to a shooting assembly for building an architectural structure through additive manufacturing. The present invention also relates to a material deposition device for propelling a material part with such a shooting assembly and to a material deposition system with such a material deposition device. The present invention further relates to a method for building an architectural structure with such a material deposition device.

### Background

It is known in the state of the art to provide a device for propelling material for building an architectural structure. MING et al. Impact Printing In: 3D Printing and Additive Manufacturing, June 2022, Vol.9, No.3, pages 203 to 211,
doi: 10.1089/3dp.2021.0068 relates to a device for building a structure using compressed air to propel a material. The device is positioned using a robot.

### Summary of the invention

The present invention relates to a shooting assembly for propelling a material part for building an architectural structure. The architectural structure may be any three-dimensional structure used for the purposes of inhabitation, conducting business, transportation, infrastructure, noise obstruction or other urban, architectural, landscaping, or human activities. It may for example comprise a wall, a floor, a ceiling, a room, a house, an apartment and/or other architectural elements. An architectural structure may comprise an acoustic barrier. The material part may comprise any material appropriate for building the architectural structure such as earth, mud, clay, cement, mortar, concrete, cob, and/or other materials. In particular, the material part may comprise an earth-based material. The material may exhibit a high density and may have a density higher than 100 kg/m³, preferably higher than 500 kg/m³, preferably higher than 1000 kg/m³, more preferably higher than 1500 kg/m³ and even more preferably higher than 2000 kg/m³. The material may exhibit a high initial yield stress, particularly during deposition, and may exhibit an initial yield stress higher than 10 kPa, preferably higher than 20 kPa, more preferably higher than 26 kPa, more preferably higher than 40 kPa and even more preferably higher than 100 kPa. The material may exhibit an initial yield stress between 26 kPa and 40 kPa. The material part may be substantially cylindrical or substantially spherical. The architectural structure may comprise multiple material parts arranged together. In particular, building the architectural structure may comprise propelling the material parts onto a work surface such as the ground, a metal plate, a wood plate, and/or previously deposited material. This may be done multiple times in order to build the architectural structure.

The shooting assembly comprises a propulsion assembly with an accelerating element configured to frictionally engage the material part. The propulsion assembly is configured to propel the material part to build the architectural structure as described above. This may comprise moving the material part quickly and/or shooting the material part. The accelerating element may be any element configured to accelerate and frictionally engage the material part. To accelerate may comprise transmitting a mechanical power to the material part. The accelerating element may be configured to propel, shoot, catapult, or otherwise increase the speed of the material part. The accelerating element may comprise a belt, which may be provided as a closed loop, and may rotate to provide an acceleration. Additionally or alternatively, the accelerating element may also comprise a track, chain, and/or other means of accelerating the material part. To frictionally engage the material part may mean to transmit a force through, or substantially through, friction. It may also mean to accelerate the material part while preventing or minimizing slippage or shearing of the material part. For example, if the accelerating element is provided by a belt, the belt may comprise a particularly rough surface configured to transmit a force to the material part via friction. To frictionally engage may mean to exclusively transmit a force via friction. The propulsion assembly may be configured to also transmit a force through other means, for example through electric, magnetic, mechanical, pneumatic, hydraulic and/or other means. The propulsion assembly may be configured to accelerate the material part up to 1 m/s, preferably up to 5 m/s, even more preferably up to 10 m/s, even more preferably up to 15 m/s. The propulsion assembly may be configured to accelerate the material part downwards, i.e. parallel to a direction of gravity. The propulsion assembly may be configured to accelerate the material part at an angle relative to the direction of gravity, for example at an angle up to 5°, at an angle up to 20°, or at an angle up to 45° relative to the direction of gravity.

The shooting assembly further comprises a delimiting device, wherein the accelerating element and the delimiting device delimit a passage with an inlet and an exit for receiving and accelerating the material part. The passage may optionally be narrowing from the inlet to the exit for compressing the material part. The delimiting device may be any device configured to delimit the passage. For example, the delimiting device may comprise a plate, a wall, a wheel, a roller, and/or a further accelerating element. The delimiting device may comprise a further propulsion assembly opposite to the first propulsion assembly. The delimiting device may exhibit a low coefficient of friction, allowing the material part to slide against it. The delimiting device may also exhibit a high coefficient of friction to frictionally engage the material part for accelerating it. The delimiting device may be stationary or moving. The position of the delimiting device may be fixed or adjustable, for example adjustable to widen or narrow a width of a section of the passage.

The passage may be a space traversable by the material part which is limited by the accelerating element and the delimiting device. The passage may be arranged vertically, wherein the material part traverses the passage from top to bottom, i.e. substantially along a direction of gravity. The length of the passage may be longer than a width or a depth of the passage, and the passage may be substantially straight. The passage may be delimited on opposite sides by the accelerating element and the delimiting device. The passage may also not be delimited on two sides between the accelerating element and the delimiting element. For example, the passage may be delimited on a left and a right side by the accelerating element and the delimiting device, and not the delimited on a front and a back side. The directions left, right, front, and back may be defined in a plane perpendicular to the direction of gravity.

The material part may enter the passage through the inlet, for example if directed towards it by the force of gravity, in other words falls into it. The delimiting device and/or the accelerating element may be configured to frictionally engage the material part when it enters through the inlet, or after it enters through the inlet, and accelerate it towards the exit. The material part may maintain the same orientation when traversing the passage or it may rotate. Further, the material part may experience slippage and/or shearing along the accelerating element and/or the delimiting device, or not experience slippage and/or shearing. The material part may experience slippage when the material part exhibits a velocity that is higher or lower than the accelerating element. The material part may experience shearing when one section of the material part exhibits a velocity that is higher or lower than another section of the material part. The material part may experience a rolling motion when traversing the passage. The passage may narrow from the inlet to the exit to compress the material part. This may mean that a width of the passage is reduced from the inlet to the exit, for example from top to bottom. The decrease in width may be linear or it may follow a quadratic, logarithmic or exponential function. Compressing the material part may comprise compacting, squeezing, exerting force onto, removing gas or air from, strengthening and/or deforming the material part, particularly due to the narrowing of the passage.

By providing a shooting assembly according to an embodiment of the present invention, the construction of architectural structures with a deposition material is enabled. A construction utilizing a shooting assembly according to an embodiment of the present invention may be particularly environmentally friendly. It may necessitate particularly few binding materials, additives and additionally or alternatively, may enable construction utilizing local resources, for example locally sourced earth-based or excavated materials. This may reduce CO2-emissions and/or other environmentally harmful processes by reducing a transport distance and/or minimizing material processing. A construction may also be enabled which is particularly fast, for example exhibiting a particularly high volume of material deposited per unit time, /or highly customized and optically pleasing. Further, a construction may be enabled for constructing architectural structures which are particularly tall for earth-based constructions, for example taller than one floor. The architectural structures may be particularly thin and/or stiff compared to other methods. For example, the present invention may enable building a structure with a width of less than 1 m, preferably of less than 0.5 m, more preferably of less than 0.2 m, and even more preferably of less than or equal to 0.1 m.

In an embodiment of the present invention, the propulsion assembly may comprise a support element, optionally a backing plate, wherein the support element is configured to support the accelerating element for counteracting an enlargement of the passage by a displacement of the accelerating element. The support element may be a single element, or an assembly of multiple elements configured to support the accelerating element. The backing plate may comprise a metal, such as steel, aluminum, magnesium, iron, and/or other metals. The backing plate may also comprise a plastic material, for example a low friction polymer, a ceramic and/or a composite material. The support element may also comprise the same materials. To support the accelerating element may mean to prevent a distortion, displacement, or other undesirable movement of the accelerating element. Without the support element, the accelerating element may be displaced from its intended track when a material part traverses the passage. For example, it may be displaced in a direction substantially perpendicular, or substantially parallel, to the contact area with the material part. If the accelerating element comprises a belt, a displacement may for example be substantially perpendicular to the belt, or it may be substantially parallel to it. The support element may enable the accelerating element to impart more force onto the material part and may therefore support a further acceleration of the material part. The support element may additionally or alternatively enable a further acceleration of the material part without slippage. It may also provide a higher precision when propelling the material part, for example by preventing a displacement or a derailment of the material part. A derailment may be a departure of the material part from its intended track along the passage.

By providing a support element for the accelerating element, a propulsion of the material part may be improved, and/or may enable the propulsion of larger material parts. Thus, the scalability to multiple part sizes may be improved. In particular, it may enable adapting one or more operating parameters of the machine and thereby optimize the machine for certain tasks, functions, and/or conditions. It may enable a higher compression of the material part, especially as the material part increases in size, thereby enabling stronger and/or more durable architectural structures to be built. Compression of the part may enable removal of air voids, further increasing the strength and/or durability of the architectural structures to be built.

In an embodiment of the present invention, the accelerating element is provided as a continuous circulating element, preferably a belt. A continuous circulating element may be an element which forms a loop or a circuit without a distinct endpoint. For example, a continuous circulating element may be formed by attaching one end of a flexible strip to its other end, forming an endless shape. Such a shape may also be referred to as a ring or a circle. The continuous circulating element may be provided by a belt, a track, a chain, and/or another suitable element. The continuous circulating element may comprise a material with a high friction coefficient. It may comprise conveyor belt material or a material commonly used in conveyor belts. It may comprise polyester, a thermoplastic elastomer and/or another polymer. In particular, a surface of the continuous circulating element may comprise a thermoplastic elastomer. The polymer may preferably comprise rubber polymers used in tire manufacturing, such as butadiene rubber and/or styrene butadiene rubber.

The belt may be a flat strip of material, which may form a loop. The belt may have a thickness between 0.1 mm and 10 mm, preferably between 0.2 mm and 5 mm, more preferably between 0.5 mm and 3 mm, more preferably between 1 mm and 2 mm, and even more preferably between 1.4 mm and 1.6 mm. The belt may have a thickness of around 1.5 mm. The belt may have a width between 10 mm and 1000 mm, preferably between 20 mm and 500 mm, more preferably between 50 mm and 100 mm and even more preferably between 80 mm and 90 mm. The belt may have a width of around 85 mm. The belt may further exhibit a high degree of rigidity, in particular flexural rigidity, particularly a degree of rigidity sufficiently high to resist an excessive deformation by the frictional engagement. The belt may additionally or alternatively exhibit a degree of rigidity, in particular flexural rigidity, low enough to bend along the circumference of a fly wheel, a guide roller, and/or other guiding elements.

The continuous circulating element may be supported by the support element. In particular, the support element may be arranged within a loop delimited by the continuous circulating element. A section of the continuous circulating element may be substantially parallel to the backing plate, particularly if the support element is a backing plate or comprises a backing plate.

By providing the shooting assembly with a continuous circulating element, a continuous operation is enabled. For example, the accelerating element may not need to be reset to a starting position and/or a back-and-forth movement may be avoided. By providing the accelerating element as a continuous circulating element, the shooting assembly may be simplified, providing a cheaper, more compact, and/or more reliable system.

In an embodiment of the present invention, the propulsion assembly further comprises a flywheel, wherein the flywheel is configured to transmit a mechanical power to the accelerating element. The flywheel may be substantially round and configured to rotate to transmit a mechanical power to the accelerating element. It may be rotatably coupled to a motor, for example through belts, a chain, and/or other appropriate power transmission means. The motor may be coupled to the accelerating element via the flywheel. The motor may be an electrical motor, a combustion engine, or a further source of mechanical power. The flywheel may transmit a mechanical power to the accelerating element via a mechanical connection. The flywheel and the accelerating element may be rotatably coupled. To be rotatably coupled may mean that the rotation of one element may cause a rotation of the other element. If the accelerating element is a continuous circulating element, the flywheel may be arranged inside a loop formed by the continuous circulating element and may be rotatably coupled to it.

The flywheel may have a large mass and/or a high moment of inertia, thereby minimizing a deceleration when the material part is engaged by the propulsion assembly and a mechanical power and/or force is transmitted to it. In particular, this may reduce a deceleration, shock and/or disruption of the accelerating element and/or of the flywheel. The flywheel may also be configured to have most of its mass arranged towards an outer circumference to maximize its moment of inertia. For example, more than 50% of its mass may be arranged at a distance of more than half its radius from its rotational axis. Preferably, more than 60%, more than 70%, more than 80% or more than 90% of its mass may be arranged at a distance of more than half its radius from its rotational axis. The flywheel may comprise a dense material, particularly a metal such as aluminum, steel, magnesium, iron and/or tungsten. It may comprise a polymer, a ceramic, and/or a composite material. The motor coupled to the flywheel may be configured to accelerate the flywheel and/or accelerating element to a velocity it had before the deceleration. Preferably, the motor may be configured to accelerate the flywheel and/or accelerating element to this velocity within 10 s, more preferably within 3 s, and even more preferably within 1 s.

By providing a flywheel, the present invention enables a simple and effective method for propelling a material part. The flywheel may enable a simple tensioning of the accelerating element, for example in conjunction with other elements, and may enable a particularly simple transmission of power to the accelerating element. By providing a high moment of inertia, it may further enable a particularly smooth operation of the shooting assembly. Additionally, the high moment of inertia may enable propelling multiple material parts in rapid succession without interference due to a deceleration of the shooting assembly.

In an embodiment of the invention, the delimiting device comprises a further propulsion assembly with a further accelerating element, wherein the accelerating element and the further accelerating element delimit the passage. The further propulsion assembly may be substantially the same as the first propulsion assembly. For example, it may comprise a further flywheel and/or a further support element. The further accelerating element may be provided as a continuous circulating element and/or a belt. The further elements may be substantially the same as the previously described elements. The delimiting device may only comprise a further accelerating element or may alternatively also comprise further delimiting elements, such as walls, plates, rollers.

The further propulsion assembly may be arranged on a side of the passage opposite to the first propulsion assembly and may be mirrored relative to it along a centerline of the passage. The first accelerating element and the further accelerating element may both be provided by belts. The further accelerating may be configured to rotate in a direction opposite to the first accelerating element. For example, one may rotate in a clockwise direction and the other may rotate in a counterclockwise direction. In particular, they may rotate such that the sections of the accelerating element delimiting the passage move downwards along a direction of gravity. The accelerating elements may be moving at the same speed or at a different speed. The accelerating elements may be synchronized to rotate at the same speed, for example through a belt, in particular a timing belt, through gears or through a chain. The further accelerating element may be powered by the same motor, engine, or further source of mechanical power as the first accelerating element, or it may be powered by a separate source of mechanical power. The further accelerating element may be rotatably coupled to the further flywheel, which may be connected to the source of mechanical power, thereby providing an indirect connection between the source of mechanical power and the accelerating element.

By providing a shooting assembly with two propulsion assemblies, an improved propulsion of the material part may be achieved. For example, the material part may not experience slippage and/or shear when traversing the passage as both sides delimiting the passage may move at the same speed. Alternatively, both accelerating elements may be configured to move at different speeds to achieve a controlled amount and/or direction of slippage and/or shear of the material part. Further, a precision, accuracy and/or throughput of the shooting assembly may be improved by providing a further propulsion assembly.

In an embodiment of the invention, the shooting assembly comprises an adjustment mechanism for adjusting a geometric parameter, in particular a width, of the passage. The adjustment mechanism may be manually operated, and additionally or alternatively may be operable by a control device and/or a computer. The adjustment mechanism may be configured to adjust a position, rotation, geometry and/or other parameter of the support elements, the flywheels, the accelerating elements and/or one or more tensioning elements which will be described in more detail below. The adjustment means may also adjust a resistance, backing force or tensioning force provided by these elements. In particular, it may adjust a backing force provided by the backing plate. The adjustment mechanism may comprise a ratchet, a screw mechanism and/or other mechanisms. The geometric parameter may be a width, but may additionally or alternatively comprise a length, a depth, an orientation, and/or an angle. The geometric parameter may be a width of the exit of the passage, and/or a width near the exit of the passage. It may be a width of the inlet, and/or a width near the inlet.

The geometric parameter may be an angle between two accelerating elements. For example, the adjustment means may adjust the accelerating elements to form an acute angle, converging towards the exit. Preferably, the adjustment means may adjust the accelerating elements to be set at an angle of up to 1 degree, more preferably up to 5 degrees, more preferably up to 10 degrees, more preferably up to 15 degrees and even more preferably up to 30 degrees. The adjustment means may also adjust the accelerating elements to diverge towards the exit, or to be parallel along a length of the passage. The geometric parameter may be adjusted as a function of the deposition material used, for example depending on its viscosity, its yield stress, its density, its grain size, its humidity, its temperature, its quantity and/or other parameter.

The position of the support element may be adjustable. For example, it may be movable along a vertical direction, or it may be movable along a horizontal direction. A width of the passage may be adjustable by moving the support element. The support element may be used to adjust the passage to a specific operating condition, for example for usage of a particular deposition material, a temperature, a humidity, a construction speed, and/or additional parameters.

In an embodiment of the invention, the shooting assembly comprises a tensioning element for tensioning the accelerating element. The tensioning element may preferably be provided as wheels, cylinders, rollers, and/or other rotating elements. Tensioning elements may also be provided as static elements and may be provided with a surface with a low friction coefficient, for example be coated with a low friction coating. The tensioning elements may in particular be arranged within a continuously circulating element, for example within a loop formed by a belt. Each propulsion element may be provided with at least one tensioning element. A propulsion assembly may comprise a continuous circulating element forming a loop with a flywheel towards the top and at least one tensioning element towards the bottom to tension the continuous circulating element. A propulsion assembly may comprise a continuous circulating element forming a loop with a flywheel towards the top and at least one tensioning element towards the side to tension the continuous circulating element. A backing plate may also be arranged within the loop and provide further tensioning. A shooting assembly may comprise two such propulsion assemblies.

By providing a shooting assembly with an adjustment mechanism, an improved shooting assembly is provided. Such a shooting assembly may be adjusted for a variety of operating conditions. For example, it may be adjusted for different material use, building conditions and/or building methods. The adjustment means allow an adjustment to optimize operating conditions, for example through experiments or trial and error. The adjustment means may also enable an adjustment of the compression of the material part, enabling a higher compression through a narrower passage and a lower compression through a wider passage. By providing tensioning elements, a further improved shooting assembly is provided. The adjustment means may be used to adjust a tension of the accelerating element for optimal operating conditions. For example, they may enable a more precise propulsion of the material part.

The present invention also relates to a material deposition device for propelling a material part for building an architectural structure, comprising a shooting assembly according to one of the previously described embodiments, and a hopper assembly. The hopper assembly comprises a hopper for holding a deposition material and a feeding mechanism, preferably an extruder, for feeding the deposition material. The hopper may be a container for holding the deposition material. It may be configured to dispense the deposition material from the bottom, but may also be configured to dispense it from a side, a top, or a combination of these. A hopper may be substantially cylindrical in shape or substantially rectangular in shape. It may comprise a substantially conical or pyramidal shape at the bottom for directing the deposition material towards an exit of the hopper. It may be open towards the top or on the side to allow a deposition material to be loaded into the hopper. Such an opening may be provided with a lid or a door. The hopper may comprise a material such as stainless steel, aluminum, and/or other metals. The hopper may also comprise a polymer, a ceramic, a composite material and/or a combination of these.

Feeding may be a controlled transfer of material from one location to another. The extruder is a mechanism which feeds material from inside the hopper to outside the hopper. It further may be a mechanism for feeding the deposition material out of the hopper to provide it to the shooting assembly. The deposition material may be provided directly, meaning without any further steps or elements between the feeding mechanism and the shooting assembly, or indirectly. If the deposition material is provided indirectly, it may pass through a portioning assembly, which will be described further below. The feeding material provided by the hopper assembly forms the material part propelled by the shooting assembly. In particular, it may comprise a helical screw for moving material from inside the hopper to outside the hopper. Such a helical screw may be arranged within a tube or an extruding section. The extruder may comprise an auger or an auger-based mechanism. The feeding mechanism may be driven by a motor, in particular an electric motor. The feeding mechanism may comprise a nozzle. The feeding mechanism may compress the deposition material during feeding and/or it may remove a gas, such as air, from the deposition material during feeding. The feeding mechanism may increase the state of yield stress of the deposition material. Feeding may mean providing material to a further element of the material deposition device and/or to provide material to a further device. A feeding rate or a flow rate may be adjustable, such a rate being the amount of material fed per unit time. For example, a feeding rate may be increased by increasing a rotational speed of the extruder. The feeding rate may be adjusted based on an operating condition, the deposition material, and/or a fill level of the hopper.

By providing a material deposition device comprising both a shooting assembly and a hopper assembly, an improved device for building architectural structures is achieved. The process of providing material parts to the shooting assembly for this purpose is simplified, as the hopper assembly can feed material to the shooting assembly. A building rate may therefore be increased, a required amount of labor reduced, and/or a build quality improved. Additionally, by extruding the material in a high state of yield stress, the need for a stabilizer is reduced, as the deposition material is already in a self-stable state in order to handle the self-weight of many layers of material. Further, new material delivery strategies are enabled, such as a process based on delivering the material to the hopper via a mechanical conveying system, rather than a pump-based system.

In an embodiment of the invention, the hopper assembly further comprises an agitating mechanism for agitating the deposition material, wherein the feeding mechanism and the agitating mechanism are mechanically decoupled. Agitating the deposition material may prevent a clogging of the hopper and/or the feeding mechanism, the forming of undesirable clumps, a hardening of the deposition material, enable a more uniform feeding rate and/or enhance the delivery of the deposition material to the extruder. The agitating mechanism may also be configured to additionally push the deposition material towards the feeding mechanism. The agitating mechanism may have any shape adapted for agitating the deposition material. In particular, it may comprise a helical shape and/or comprise arms, bars, and/or paddles for agitating the deposition material. The agitating mechanism may comprise a metal, such as stainless steel, aluminum, iron, or another metal. It may comprise a polymer, composite material, and/or a combination of these. The agitating mechanism may be coaxial with the feeding mechanism and/or the hopper. It may be configured to rotate to agitate the deposition material. It may be coupled to a motor, in particular an electric motor for this purpose. This motor may be the same motor driving the feeding mechanism, or it may be a further motor.

To be mechanically decoupled may mean that the feeding mechanism can be moved independently of the agitating mechanism. To be mechanically decoupled may also mean that a speed, force, rotation, and/or position of the agitating mechanism may be independent of the feeding mechanism. The mechanical decoupling may be provided by two separate motors driving the feeding mechanism and the agitating mechanism. It may also be provided by a single motor through a gearbox and/or other means. The agitating mechanism may also be mechanically coupled to the feeding mechanism.

By providing an agitating mechanism, the material handling of the material deposition device is improved. Disruptions such as clogging may be reduced and/or prevented, a feeding rate may be increased or rendered more uniform and/or a feeding mechanism rendered more predictable. This may improve build quality and/or reduce downtime. By mechanically decoupling the agitating mechanism, the hopper assembly is further improved. A feeding rate may be increased to adapt it to a process parameter, while maintaining an appropriate movement of the agitating mechanism. It may also provide improved timing, in particular an improved extrusion timing, reducing wait times and/or speed up a build process.

In an embodiment of the invention, the material deposition device further comprises a portioning assembly for portioning the extruded deposition material to provide a material part to the shooting assembly, preferably through use of a cutting means. The portioning assembly may be arranged between the hopper assembly and the shooting assembly. In particular, the portioning assembly may be arranged above the shooting assembly and below the hopper assembly. The portioning assembly is configured to portion the deposition material fed from the hopper assembly to provide a material part. For example, the deposition material may be extruded from the hopper assembly in a cylindrical continuous shape and the portioning assembly may cut this shape into material parts of a predefined length. The portioning assembly may prevent a rotation and/or an undesired movement of the deposition material. The portioning assembly may comprise cutting means to portion the deposition material. The cutting means may comprise a knife, a blade, a cutting wire, or other means. The hopper assembly may be configured to stop a feeding of material when a cutting takes place. This may be to prevent a force being exerted onto the cutting means. For example, if the cutting means comprise a knife, the knife may portion the deposition material and a feeding may stop until the portioned material part is propelled. After the material part is propelled, a feeding and portioning may resume. The cutting means may also comprise two of knifes, blades, cutting wires, or other such elements. For example, a cutting means may be provided by two blades arranged opposite each other. The cutting means may be configured to be pushed by pneumatic, electric, mechanical, or other means to portion the deposition material.

By providing a material deposition device with a portioning assembly, an improved operation of said device is enabled. A material part may be provided with predefined parameters, such as length or mass. This may enable a more precise and uniform operation and may reduce error rates or interruptions. The portioning assembly may further improve a provision of the deposition material to the shooting assembly, thereby further improving its operation. The portioning assembly may also improve the precision of the material deposition device, in particular by preventing a rotation of the material part.

In an embodiment of the invention, the portioning assembly is configured to portion the extruded deposition material such that a dimension of the material part is substantially independent of a feeding rate of the deposition material from the feeding mechanism. The dimension of the material part may comprise a length, a width, or a depth. It may also comprise a weight, a density, and/or another parameter. The feeding rate may comprise a mass of material per unit time, a speed of the material, a volume of the material per unit time, and/or other parameters. To be independent may mean that the feeding rate can be changed without changing the dimension of the material part and vice versa. To be independent may also mean that the feeding rate can be changed without substantially changing the dimension of the material part and vice versa.

The portioning assembly may comprise a sensor configured to measure a dimension of the deposition material to control a portioning. This may enable providing a dimension of the material part independent of the feeding rate. For example, the sensor may be configured to measure a length and the portioning assembly may be configured to cut a deposition material to obtain a material part of a certain length. The portioning assembly may further comprise a holder and/or a gripper. A cutting means may exert a lateral force on the deposition material. The holder may be configured to provide a support against such a lateral force and may also hold the cut material part until it is propelled by the shooting assembly. The holder may be configured to more the material part to the shooting assembly. The linear actuator may be configured to move the material part to the shooting assembly.

By providing a portioning assembly configured to provide a dimension of the material part independent of the feeding rate, a better process control may be achieved. For example, a feeding rate may be adjusted depending on operating conditions, such as the amount of material in the hopper, while maintaining a constant material part dimension. This may enable a more uniform and/or higher quality construction, and/or very specific patterning and sequencing of the parts in a global arrangement. It may also enable operating the material deposition device independently of a fill level of the hopper assembly.

In an embodiment of the invention, the portioning assembly comprises a feeding means configured to control a feeding of the extruded deposition material. The feeding means may be configured to feed the extruded deposition material to the shooting assembly. The extruded deposition material may comprise the material part. The feeding means may additionally or alternatively be configured to feed the extruded deposition material to the portioning assembly. The feeding means may be configured to guide the deposition material during the extrusion and to the shooting mechanism after portioning. The feeding means may be provided with a substantially cylindrical element for guiding the deposition material, or alternatively an element of an appropriate shape. The feeding means may also be configured to grip the deposition material, pulling it towards the shooting assembly. The feeding means may be configured to move and may be actuated pneumatically. They may also be actuated electrically, electronically, magnetically, hydraulically and/or mechanically. The feeding means may be controlled based on a sensor, for example the feeding means may be controlled to guide a material only until a certain length is reached, thereby providing a material part of a predefined length. The feeding means may be operated in conjunction with the portioning of the material part, or may be operated independently of it. The feeding means may in be configured to move along a vertical direction, for example up and down.

By providing a feeding means, the operation of the portioning assembly and/or the material deposition device is improved. By providing a feeding means, a feeding rate may be rendered more uniform, more predictable and/or a clogging of the system may be prevented. This may provide a faster build rate, a more precise building process, and/or a more efficient operation of the material deposition device.

In an embodiment of the invention, the material deposition device further comprises a control device configured to control the material deposition device to retain and not propel the material part until the material deposition device has reached a deposition position. The control device may comprise a computer, a microchip, an industrial control device, and/or a further device configured to control the material of the position device. The control device may be configured, programmed, and/or designed to control the material deposition device. The control device may be connected to the portioning assembly, the hopper assembly, and/or the shooting assembly via cables, and/or wirelessly. It may further be connected to sensors and configured to measure a dimension of the deposition material and/or the material part. The control device may be configured to control a position of the material deposition device, for example by controlling a motion assembly, which will be described in further detail below. The deposition position is a position in which the material deposition device should propel the material part. The deposition position may be arranged above a position onto which the material part should be propelled. It may also be near such a position. The deposition position may be determined by the control device based on sensors or it may be predetermined, for example calculated or modelled before a building process.

The control device may control a holder of the portioning assembly for the purpose of retain the material part until the material deposition device has reached the deposition position. The control device may also control the hopper assembly not to feed a material during certain times, for example when the material deposition device is moving to the deposition position. To retain may mean to hold on to the material part, that is, to not move the material part to the shooting assembly. The control device may also be configured to not portion a deposition material to provide a material part until the material position device is in the deposition position. This may be referred to as buffering, that is, feeding deposition material and not portioning it until a deposition position is reached. This may enable the propelling of the material part to be synchronized with the movement of the material deposition device. The control device may alternatively control the hopper assembly to feed material when the material deposition device is moving to the deposition position, for example to enable a shorter time between propelled material parts.

By providing a control device as described above, a faster and/or more efficient operation may be achieved. The operation of the material deposition device may be simplified as it may be controlled partially or completely by the control device, and a time between propelling of material parts may be reduced.

In an embodiment of the invention, the material deposition device comprises a control device configured to control a propulsion of the material part based on a number of previously propelled material parts. The control device may track, that is remember or save onto a memory device, a number of previously propelled parts. The number of previously propelled parts may be the number of previously propelled parts since the last filling of the hopper. The control device may be configured to control a minimum time between the propulsion of material parts based on a number of previously propelled material parts. For example, the minimum time may be increased to account for a lower feeding rate due to a lower fill level of the hopper. The control device may take an extrusion rate into account and/or may control the extrusion rate. The time between propelled material parts may be measured based on when a material part crosses a certain position, for example as determined by a laser sensor. Alternatively, the control device may control the material deposition device based on a weight and/or a height of the material deposition device in the hopper.

By controlling a propulsion of the material part as described above, an improved material deposition device is provided as a variable feeding rate and/or other parameters based on a fill level of the hopper may be taken into account. This may provide for material parts with a uniform mass and/or shape independent of the fill level. Additionally, it may speed up a build process as a minimum time between propelled material parts may be minimized. It may also allow a precise patterning or sequencing of the parts relative to each other in a global configuration.

The present invention also relates to a material deposition system for propelling a material part for building an architectural structure, comprising a material deposition device according to one of the previously described embodiments, and a motion assembly, preferably a gantry, construction machine, or an industrial robot, for moving the material deposition device to a deposition position to propel the material part. The motion assembly may be a part of a larger structure, such as a building, or may be independently movable. For example, the motion assembly may comprise an industrial robot with wheels and/or tracks. In particular, the motion assembly may be configured to move the material deposition device within a building site. The motion assembly may move the material deposition device along a vertical direction and/or along a horizontal direction. The motion assembly may also rotate the material deposition device along a vertical axis and/or along a horizontal axis. The motion assembly may be controlled to move the material deposition device based on information calculated during operation, or on-the-fly, or based on precalculated data, for example based on three-dimensional CAD-data. The motion assembly may be connected to a control device, which may be configured to control the motion assembly and/or a movement of the motion assembly. The motion assembly may comprise an autonomous construction machine configured to execute a construction autonomously, preferably being controlled by the control device. The material deposition system may comprise a control device configured to control the material deposition device.

The material deposition system may comprise a material storage system, which may be configured to hold more material than the hopper. For example, it may be configured to fill the hopper to provide a deposition material to the material deposition device. It may alternatively also be configured to transport the deposition material from an external storage to the material deposition device, for example through a pump, a digger, an excavator, a belt conveyor, a bucket conveyor, and/or other system. The material deposition system may be configured to extract the deposition material from the local operating area, in particular the ground.

By providing a material deposition system with a motion assembly, a construction of large architectural structures may be enabled. Particularly if the motion system is configured to move the material deposition device within a construction site, multiple structures can be built quickly, efficiently, cheaply, and/or at a large scale.

The present invention also relates to a method for building an architectural structure with a material deposition device according to one of the previously described embodiments. Such a method comprises the steps of providing the deposition material, feeding the deposition material, portioning the deposition material to obtain a material part, and propelling the material part by frictionally engaging the material part for building the architectural structure. To provide the deposition material may comprise obtaining the deposition material through digging, mining, mixing, or otherwise acquiring the deposition material. It may comprise filling a hopper with the deposition material. To feed may preferably mean to extrude, and may be done through one of the arrangements previously described. The feeding may preferably be executed through a hopper assembly. Feeding may mean to feed the deposition material to a device, or to an assembly configured to execute further steps. Preferably it may mean to feed the deposition material to a portioning assembly or to a shooting assembly. The portioning may preferably be executed through a portioning assembly as previously described. The portioning may comprise cutting the deposition material to obtain a material part. The propelling may preferably be executed through a shooting assembly as previously described. Propelling may also comprise a shooting. Such a method may enable a particularly environmentally friendly, rapid, cheap, and/or optically pleasing construction of architectural structures.

### Brief description of the figures

Fig. 1 is a schematic illustration of a material deposition device according to one embodiment of the present invention.
Fig. 2 is a schematic illustration of a shooting assembly according to the embodiment shown in fig. 1.
Fig. 3 is a schematic illustration of a hopper assembly according to one embodiment of the present invention.
Fig. 4 is a further schematic illustration of an interior of the hopper assembly shown in fig. 3.
Fig. 5 is a schematic illustration of a portioning assembly according to one embodiment of the present invention.
Fig. 6 is a schematic illustration of a material deposition system according to one embodiment of the present invention.
Fig. 7 shows a flow chart method for building an architectural structure according to one embodiment of the present invention.

### Detailed description of the figures

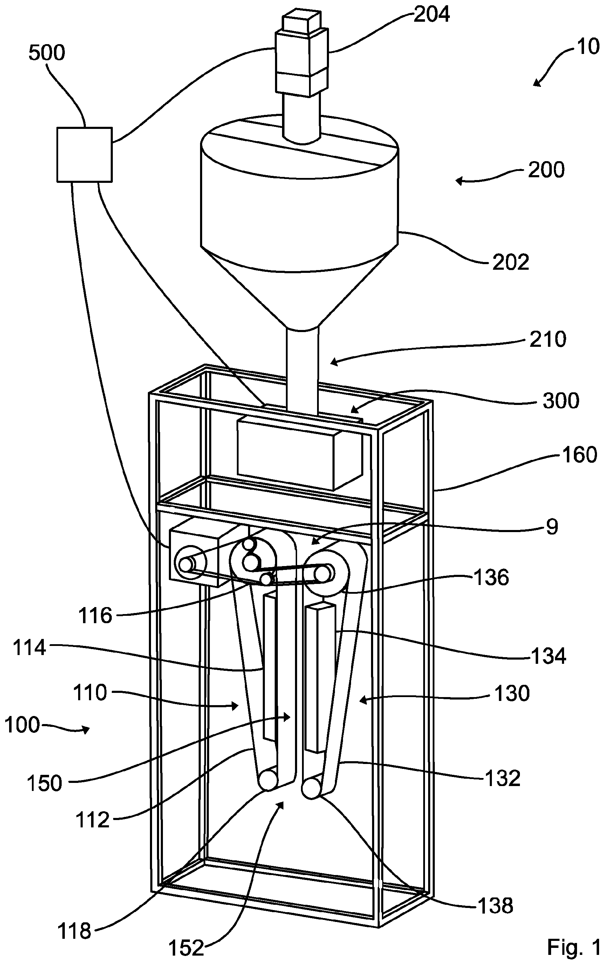

Fig. 1 is a schematic illustration of a material deposition device 10 according to one embodiment of the present invention. The material deposition device 10 comprises a shooting assembly 100, a hopper assembly 200, a portioning assembly 300 and a control device 500. The elements of the material deposition device 10 are supported by structural elements 160. These are not depicted in detail and are only shown for illustration purposes. The shooting assembly 100 is arranged towards the bottom of the material deposition device 10. The hopper assembly 200 is arranged towards the top of the material deposition device 10, and the portioning assembly 300 is arranged between the shooting assembly 100 and the hopper assembly 200. In other words, the portioning assembly 300 is positioned above the shooting assembly 100 and the hopper assembly 200 is positioned above the portioning assembly 300. The terms top and bottom are understood to be defined by a direction of gravity during a normal operation of the material deposition device 10, wherein the direction of gravity points from top to bottom. Further, the terms left and right are understood to refer to the left and right direction of the material deposition device 10, meaning left is a side towards the left as shown in fig. 1, and right is a side towards the right as shown in fig. 1. Additionally, the terms front and back refer to a front and back as shown in fig. 1.

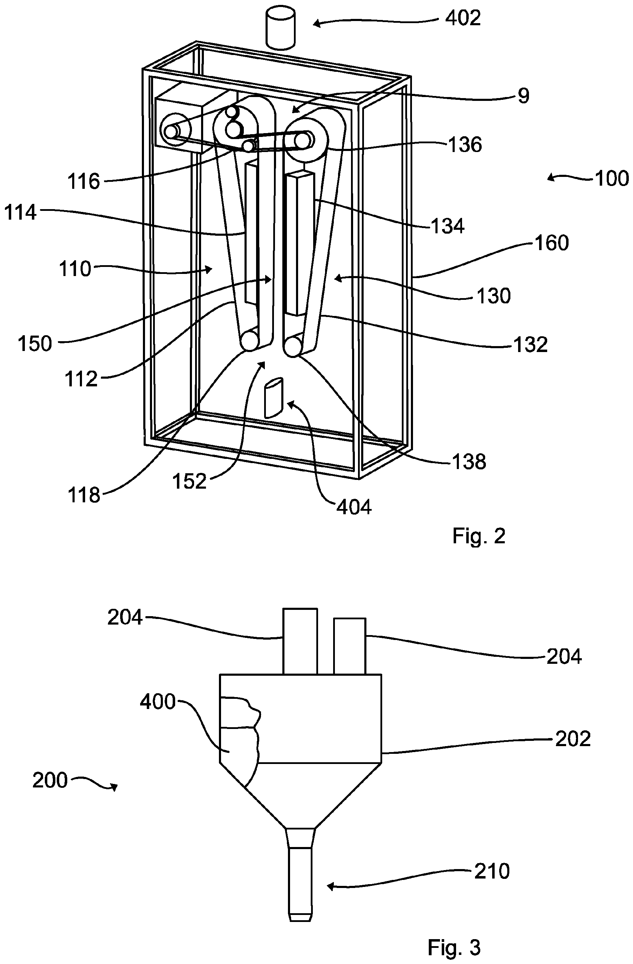

The shooting assembly 100 comprises two propulsion assemblies 110 and 130 with, respectively, an accelerating element provided here as belts 112 and 132, each forming a closed loop. The propulsion assemblies 110 and 130 delimit a passage 150 between them via the belts 112 and 132. Either of the propulsion assemblies 110 or 130 may be referred to as a delimiting device as previously described. The propulsion assembly 110 is arranged to the left of the passage 150, while the propulsion assembly 130 is arranged to the right of the passage 150. The passage 150 has an inlet 9 towards the top and an exit 152 towards the bottom. The propulsion assemblies 110 and 130 are configured to turn the belts 112 and 132 such that the sections delimiting the passage 150 are moving downwards. In other words, the belt 112 is configured to turn in a clockwise direction as seen from the perspective shown in fig. 1, and the belt 132 is configured to turn in a counterclockwise direction as seen from the same side. The shooting assembly 100 is configured to accelerate a material part 402 via the belts 112 and 132 to propel it through the exit 152 and build an architectural structure 700. Further components of the shooting assembly 100 and the propulsion assemblies 110 and 132 will be described in more detail in relation to fig. 2.

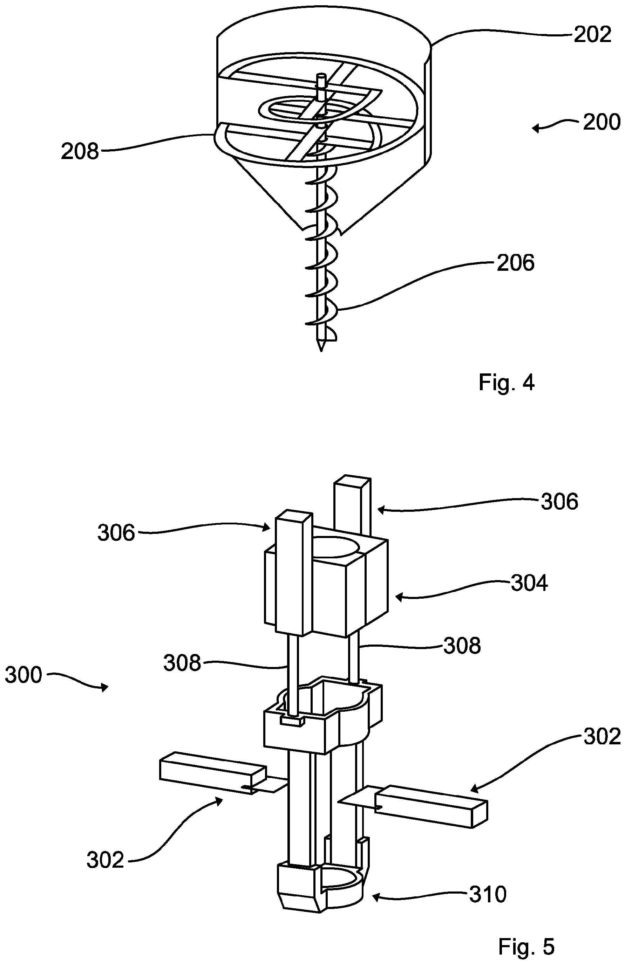

The hopper assembly 200 is positioned above the portioning assembly 300 and the shooting assembly 100. It comprises a hopper 202, a motor 204, a feeding mechanism provided as an extruder 206, an agitating mechanism provided as an agitator 208 and an extruding section 210. The extruder 206 and the agitator 208 are not shown in fig. 1 and will be described in more detail in reference to fig. 4. The hopper 202 comprises a substantially cylindrical section arranged above a substantially conical section, which in turn is arranged above and connected to the extruding section 210. The motor 204 is arranged above the cylindrical section and is shown here arranged substantially along a centerline of the hopper assembly 200. The motor 204 is connected to the extruder 206 and the agitator 208. The hopper assembly 200 is configured to hold a deposition material 400 and extrude it via the extruder 206 to provide a material part 402 for propulsion by the shooting assembly 100. Further details of the hopper assembly 200 will be described in relation to figs. 3 and 4.

The portioning assembly 300 is arranged between the shooting assembly 100 and the hopper assembly 200. It is shown here as a box for illustration purposes and will be described in further detail in relation to fig. 5. The portioning assembly 300 is configured to portion a deposition material 400 extruded by the hopper assembly 200 to provide a material part 402 for propulsion by the shooting assembly 100. The material part 402 is moved by gravity from the portioning assembly 300 to the inlet 9 of the passage 150, where the propulsion assemblies 110 and 130 are configured to engage the material part 402 via the belts 112 and 132 to compress and accelerate it.

The control device 500 is connected to the shooting assembly 100, the hopper assembly 200 and the portioning assembly 300.The control device 500 is a computer and is configured to control the material deposition device 10 to propel the material part 402 to build an architectural structure 700. In particular, the control device 500 is connected to the motor 204 to control an extrusion and/or an extrusion rate of the deposition material 400 by the hopper assembly 200. The control device 500 is also connected to a cutting means 302 of the portioning assembly 300, which will be described in relation to fig. 5. The control device 500 is configured to control the cutting means 302 for portioning the extruded deposition material 400. In some embodiments, the control device 500 may also be connected to a sensor of the portioning assembly 300. The control device 500 is also configured to control the shooting assembly 100 to accelerate a material part 402 that enters the passage 150 through the inlet 9 to build the architectural structure 700.

Fig. 2 is a schematic illustration of the shooting assembly 100 according to the embodiment shown in fig. 1. The shooting assembly 100 comprises the propulsion assemblies 110, 130 on the left and on the right. These limit the passage 150 running vertically from top to bottom and having an inlet 9 and an exit 152. The vertical extent of the passage 150 is substantially longer than its width or depth, and the width of the exit 152 is narrower than the width of the inlet 9. The shooting assembly 100 is further supported by structural elements 160, only shown schematically for illustration purposes in Fig. 1. The propulsion assembly 110 comprises the belt 112, a support element provided as a backing plate 114, a flywheel 116 and a guiding element 118. The guiding element 118 is provided here as a roller. The belt 112 forms a closed loop and is arranged around the flywheel 116 and the guiding element 118, with the flywheel 116 arranged at the top of the loop and the guiding element 118 arranged at the bottom of the loop. The flywheel 116 and guiding element 118 are arranged to guide the belt 112. The propulsion assembly 110 may further include a tensioning element not shown in the figures for adjusting a tension and/or a slack in the arrangement of the belt 112, such that it is tensioned and not hanging loosely, only providing a minimal amount of slack. The flywheel 116 is further rotationally coupled to the belt 112, meaning that the rotation of the flywheel 116 can induce a movement of the belt 112 and vice versa. The backing plate 114 is arranged within the loop formed by the belt 112 and between the flywheel 116 and the guiding element 118. The backing plate 114 is arranged vertically, running substantially parallel to the section of the belt 112 which delimits the passage 150 and contacting it. The backing plate 114 is arranged to support the belt 112 against a displacement during operation of the shooting assembly 100.

The propulsion assembly 130 is arranged on a side of the passage 150 opposite to the propulsion assembly 110. The propulsion assembly 130 comprises the belt 132, a support element provided as a backing plate 134, a flywheel 136 and a guiding element 138. The guiding element 138 is provided here as a roller. The propulsion assembly 130 is similar to the propulsion assembly 110 mirrored along the passage 150. As in the arrangement shown for the propulsion assembly 110, the belt 132 forms a closed loop around the backing plate 134, the flywheel 136 and the guiding element 138. The flywheel 136 and the guiding element 138 are configured to guide the belt 132. The propulsion assembly 130 may further include a tensioning element not shown in the figures for adjusting a tension and/or a slack in the arrangement of the belt 132. The flywheel 136 is further rotationally coupled to the belt 132, meaning that the rotation of the flywheel 136 can induce a movement of the belt 132 and vice versa. The backing plate 134 is configured to support the belt 132 against a displacement during operation of the shooting assembly 100.

An electric motor is arranged at an upper left side of the shooting assembly 100 next to the propulsion assembly 110, and is connected to the flywheels 116 and 136 via belts. The electric motor is configured to turn the flywheels 116 and 136, which are in turn coupled to the belts 112 and 132. The electric motor is configured to turn the belts 112 and 132 as described above in opposite directions and at the same speed, achieving a downward movement within the passage 150.

Two material parts 402 and 404 are also shown. The material part 402 is shown here above the shooting assembly 100 and has a substantially cylindrical shape. Its height is approximately 50% larger than its width. Other dimensions and shapes are also possible. The material part 402 is shown here for illustration purposes and represents a material part that has been cut by the portioning assembly 300. The material part 402 is configured to fall down and enter the passage 150 through the inlet 9, contacting the belts 112 and 132 delimiting the passage 150. These are configured to frictionally engage the material part 402 and accelerate it by moving it downwards towards the exit 152. In the embodiment illustrated in fig. 2, the material part 402 is slightly wider than the width of the passage 150. As the belts 112 and 132 move in a downwards direction, they move the material part 402 with it, thereby compressing it as it passes through the narrowing passage 150.

After being compressed and accelerated by the propulsion assemblies 110 and 130, the material part 402 exits the passage 150 through the exit 152. The compressed material part 404 is shown below the exit 152 to illustrate this. It is shown as a squeezed cylinder, meaning that its shape is similar to the material part 402, but with a reduced width. This shape is for illustration purposes only to indicate the compression of the material part 404. The material part 404 may have an irregular shape, an approximately spherical shape, or other shapes as well. As it exits the passage 150, the compressed material part 404 may have a speed between 8 m/s and 12 m/s. It may then be deposited on a work surface, such as the ground or previously deposited material, to build up an architectural structure 700. Examples of such architectural structures 700 may be walls or single floor buildings.

Fig. 3 is a schematic illustration of a hopper assembly 200 according to one embodiment of the present invention. The illustration is of a lateral view, showing the hopper 202, two motors 204, and the extruding section 210. Additionally, a breakout view is shown on the left of the hopper 202 to illustrate its contents. The hopper 202 holds the deposition material 400. The hopper assembly 200 is configured to hold this deposition material 400 within the hopper 202 and extrude it through the extruding section 210 to provide it to the portioning assembly 300 and the shooting assembly 100. The deposition material 400 is extruded via the extruder 206. While inside the hopper 202, the deposition material 400 is agitated by the agitator 208 to ensure proper material flow. The extruder 206 and the agitator 208 will be shown in more detail in relation to fig. 4.

In the embodiment shown in fig. 3, the hopper assembly 200 comprises two motors 204, as opposed to one motor 204 as shown in the embodiment in fig. 1. The two motors 204 are configured to each independently drive the extruder 206 and the agitator 208. By providing independent motors 204 to power the extruder 206 and the agitator 208, better control of the extrusion process can be achieved, as both can be independently driven at the appropriate rate for a given fill level, and material state.

Fig. 4 is a further schematic illustration of an interior of the hopper assembly 200 shown in fig. 3. The hopper 202 is shown in a cutaway view, only showing a back half of the hopper 202. The extruding section 210 and the motors 204 are not shown, allowing a better view of the extruder 206 and the agitator 208. The extruder 206 is arranged vertically within the hopper assembly 200 and is positioned along a centerline of it. An upper section of the extruder 206 is arranged within the hopper 202, while a lower section of the extruder 206 is arranged within the extruding section 210. It is provided with a screw shape to extrude the deposition material 400, which is not shown here. As it turns, it carries with it material from the hopper 202 and extrudes it by transporting it downwards through the extruding section 210. The extruder 206 is arranged coaxially with the agitator 208. The agitator 208 is shown here with a spiral geometry, however it may have any appropriate shape to agitate the deposition material 400. For example, it may be provided as a number of arms projecting into the hopper 202 to agitate the material. The spiral shape of the agitator 208 is supported by structural plates projecting outwards from the center axis. The agitator 208 may additionally or alternatively comprise straight and/or bent bars. The configuration shown here may also be used within the embodiment of the hopper assembly 200 shown in fig. 1. The extruder 206 and the agitator 208 may be connected to one or multiple motors directly or through gears.

Fig. 5 is a schematic illustration of a portioning assembly 300 according to one embodiment of the present invention. The portioning assembly 300 comprises two cutting means 302, a feeding means 304, and a holder 310. The portioning assembly 300 is arranged below the hopper assembly 200 and above the shooting assembly 100. In particular, the portioning assembly 300 is arranged below the exit of the extruding section 210. This is to receive the extruded deposition material 400 as it exits the extruding section 210, to then portion it to provide a material part 402 to the shooting assembly 100 positioned below.

The feeding means 304 are configured to guide the extruded material 400 towards the cutting means 302 with precision, thereby improving the portioning process. The feeding means 304 enclose a circular shape, which is adapted to engage with an approximately cylindrical extruded section of material 400. The feeding means 304 comprises two pneumatic actuators 306, which are configured to move the holder 310 along two linear guides 308. Through these, the holder 310 can be moved with the extruded material 400 for guiding towards the shooting assembly 100 below.

The cutting means 302 are provided with two blades and are configured to cut the extruded material to obtain a predefined material part 402. The cutting means 302 are configured to cut the extruded deposition material 400 through these blades, but in other embodiments they may be provided with other means for this, such as wire. In the shown embodiment, the cutting means 302 can move between an open and a closed position. The open position is shown in fig. 5 and allows extruding material to pass through the portioning assembly 300. The closed position is a position in which the two blades are moved towards each other to cut the extruded material, obtaining a material part 402. In the shown embodiment, the information on when to cut the extruded deposition material 400 is provided by a sensor, not shown here, to determine its length. In other embodiments other methods are also possible. For example, a computational model of the extrusion process may calculate when an appropriate length of material has been extruded.

The holder 310 is arranged below the cutting means 302 and is arranged coaxially to the feeding means 304. The holder 310 is configured to move linearly along a vertical direction and holds the material part 402, guiding it downwards towards the shooting assembly 100 when it is cut. The holder 310 can move between a top position, in which it is close to the cutting means 302, and a bottom position, as shown in fig. 5. The holder 310 is configured to be in the top position during an extrusion process to hold the extruded deposition material 400 as it passes through the portioning assembly 300. When the cutting means 302 cut the material, the holder 310 provides a stability against lateral movement of the deposition material 400. When the cutting is completed, the holder moves downwards, guiding the material part 402 towards the shooting assembly 100. Through this, the holder 310 can provide a higher accuracy during operation and prevent a lateral displacement of the material part 402.

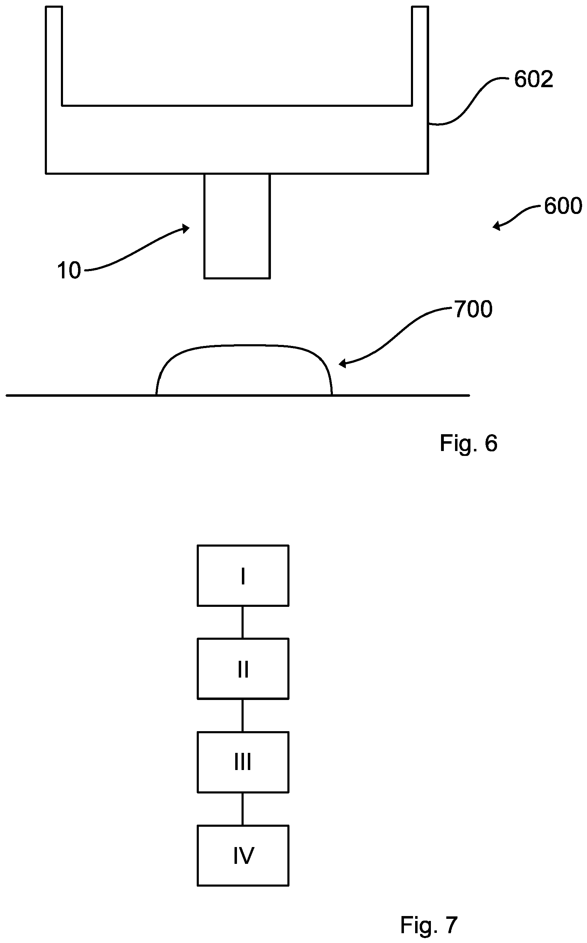

Fig. 6 is a schematic illustration of a material deposition system 600 according to one embodiment of the present invention. The material deposition system 600 comprises a motion assembly provided as a gantry 602 and a material deposition device 10.

The material deposition device 10 is attached below the gantry 602 and may be the same as shown in fig. 1. The gantry 602 is movable and configured to move the material deposition device 10 to build an architectural structure 700. The architectural structure 700 is shown below the material deposition system 600. The architectural structure 700 is shown here as a wall and was constructed by propelling material parts 402.

Fig. 7 shows a flow chart method for building an architectural structure 700 according to one embodiment of the present invention. The method comprises a first step I of providing a deposition material 400 and a second step II of feeding the deposition material 400. The method further comprises a third step III of portioning the extruded deposition material 400 to obtain a material part 402. The method also comprises a fourth step IV of propelling the material part 402 by frictionally engaging the material part 402 for building the architectural structure 700. Such a method may be performed using the material deposition device 10 shown in fig. 1 or the material deposition system 600 shown in fig. 6.

### Reference signs

- 9: inlet
- 10: material deposition device
- 100: shooting assembly
- 110: propulsion assembly
- 112: accelerating element
- 114: support element
- 116: flywheel
- 118: guiding element
- 130: propulsion assembly
- 132: accelerating element
- 134: support element
- 136: flywheel
- 138: guiding element
- 150: passage
- 152: exit
- 160: structural element
- 200: hopper assembly
- 202: hopper
- 204: motor
- 206: feeding mechanism
- 208: agitating mechanism
- 210: extruding section
- 300: portioning assembly
- 302: cutting means
- 304: feeding means
- 306: pneumatic actuator
- 308: linear guide
- 310: holder
- 400: deposition material
- 402: material part
- 404: compressed material part
- 500: control device
- 600: material deposition system
- 602: motion assembly
- 700: architectural structure
- I: providing a material deposition material
- II: feeding a deposition material
- III: portioning a deposition material
- IV: propelling a deposition material

## Claims

1. A shooting assembly (100) for propelling a material part (402) for building an architectural structure (700) through additive manufacturing, the shooting assembly (100) comprising a propulsion assembly (110) with an accelerating element (112; 132) configured to frictionally engage the material part (402), and a delimiting device (130, 132), wherein the accelerating element (112; 132) and the delimiting device (130, 132) delimit a passage (150) with an inlet (9) and an exit (152) for receiving and accelerating the material part (402), the passage (150) optionally narrowing from the inlet (9) to the exit (152) for compressing the material part (402).

2. The shooting assembly (100) according to claim 1, **characterized in that** the propulsion assembly (110) comprises a support element (114; 134), optionally a backing plate, wherein the support element (114; 134) is configured to support the accelerating element (112; 132) for counteracting an enlargement of the passage (150) by a displacement of the accelerating element (112; 132).

3. The shooting assembly (100) according to claim 1 or 2, **characterized in that** the accelerating element (112) is provided as a continuous circulating element, preferably a belt.

4. The shooting assembly (100) according to one of the preceding claims, **characterized in that** the propulsion assembly (110) further comprises a flywheel (116; 136), wherein the flywheel (116; 136) is configured to transmit a mechanical power to the accelerating element (112; 132).

5. The shooting assembly (100) according to one of the preceding claims, **characterized in that** the delimiting device (130, 132) comprises a further propulsion assembly (130) with a further accelerating element (132), wherein the accelerating element (112) and the further accelerating element (132) delimit the passage (150).

6. The shooting assembly (100) according to claim 5, **characterized in that** the shooting assembly (100) comprises an adjustment mechanism for adjusting a geometric parameter, in particular a width, of the passage (150).

7. The shooting assembly (100) according to one of the preceding claims, **characterized in that** the propulsion assembly (110; 130) comprises a tensioning element for tensioning the accelerating element (112; 132).

8. A material deposition device (10) for propelling a material part (402) for building an architectural structure through additive manufacturing, comprising a shooting assembly (100) according to one of the preceding claims and a hopper assembly (200), the hopper assembly (200) comprising a hopper (202) for holding a deposition material (400) and a feeding mechanism (206), preferably an extruder, for feeding the deposition material (400).

9. The material deposition device (10) according to claim 8, wherein the hopper assembly (200) further comprises an agitating mechanism (208) for agitating the deposition material (400), wherein the feeding mechanism (206) and the agitating mechanism (208) are mechanically decoupled.

10. The material deposition device (10) according to claim 8 or 9, **characterized in that** the material deposition device (10) further comprises a portioning assembly (300) for portioning the extruded deposition material (400) to provide a material part (402) to the shooting assembly (100), preferably through use of a cutting means (302).

11. The material deposition device (10) according to claim 10, **characterized in that** the portioning assembly (300) is configured to portion the extruded deposition material (400) such that a dimension of the material part (402) is substantially independent of a feeding rate of the deposition material (400) from the feeding mechanism (206).

12. The material deposition device (10) according to claim 10 or 11, **characterized in that** the portioning assembly (300) comprises a feeding means (304) configured to control a feeding of the extruded deposition material (400).

13. The material deposition device (10) according to one of the claims 8 to 12, **characterized in that** the material deposition device (10) further comprises a control device (500) configured to control the material deposition device (10) to retain and not propel the material part (402) until the material deposition device has reached a deposition position.

14. A material deposition system (600) for propelling a material part (402) for building an architectural structure (700) through additive manufacturing, comprising a material deposition device (10) according to one of claims 8 to 13, and a motion assembly (602), preferably a gantry or an industrial robot, for moving the material deposition device (10) to a deposition position to propel the material part (402).

15. A method for building an architectural structure (700) through additive manufacturing with a material deposition device (10) according to one of claims 8 to 14, comprising the following steps:
- providing (I) a deposition material (400);
- feeding (II) the deposition material (400);
- portioning (III) the deposition material (400) to obtain a material part (402); and
- propelling (IV) the material part (402) by frictionally engaging the material part (402) for building the architectural structure (700).
